# DEMANDE DE BREVET EUROPEEN

(11) **EP 2 957 965 A1**
(43) Date de publication de la demande: **23.12.2015**
(21) Numéro de dépôt: 14173291.7
(22) Date de dépôt: 20.06.2014
(51) Int. Cl.: G04B 37/00, G04B 37/08, G04B 47/06

(54) **Dispositif de fermeture semi-étanche**

(71) Demandeur: The Swatch Group Research and Development Ltd., 2074 Marin (CH)
(72) Inventeur: Germiquet, Christophe, 2515 Prêles (CH); Stalder, Michael, 2503 Bienne (CH)
(74) Mandataire: Tournel, Maxime Jean-Joseph

(57) **Abrégé**

La présente invention concerne un objet portable comprenant un boîtier (2) formant une enceinte dans laquelle un appareil (69 nécessitant de l'air pour son fonctionnement est agencé, caractérisé en ce que ledit objet portable comprend en outre un dispositif de fermeture (12) comprenant au moins un élément perméable.

## Description

La présente invention concerne un objet portable comprenant un boîtier formant une enceinte dans laquelle un appareil nécessitant de l'air pour son fonctionnement est agencé.

### ART ANTERIEUR

Il est connu des objets portables comme des montres ou des appareils téléphoniques mobiles ou des tablettes tactiles qui sont considérés comme étanches afin de pouvoir être utilisé en milieu aquatique. Pour cela, ledit objet portable est muni d'une multitude de joints ou de solutions permettant d'assurer une étanchéité quasi-parfaite tant aux gaz qu'aux liquides. En horlogerie, les joints sont en général utilisés pour assurer l'étanchéité entre deux pièces mobiles, par exemple couronne de remontoir et tube de couronne, ou entre deux pièces fixes, par exemple fond et carrure.

Ainsi, en plongée, les joints doivent être imperméables à l'hélium car les molécules qui sont plus petites que les molécules d'oxygène passent au travers du joint. Lors de la remonté du plongeur, il se produit un dégazage de l'hélium contenu dans la montre qui va se retrouver en surcompression. Si aucun dispositif d'évacuation de l'Hélium n'est prévu, la montre va généralement perdre son verre qui n'est pas conçu pour recevoir une pression interne.

Toutefois, il existe des applications dans lesquelles cette étanchéité quasi parfaite est un inconvénient. En effet, pour des applications de type altimètre ou l'utilisation d'une alimentation zinc-air, il est nécessaire de permettre un flux d'air entre l'enceinte de l'objet portable dans laquelle le dispositif altimètre et/ou l'alimentation zinc-air sont agencés et l'extérieur de l'objet portable.

Si de tels objets existent, il est nécessaire de garder l'étanchéité dudit appareil.

### RESUME DE L'INVENTION

La présente invention cherche donc à pallier les inconvénients de l'art antérieur en fournissant un objet portable comprenant un dispositif semi-étanche c'est à dire laissant passer les gaz mais pas les liquides.

A cet effet, l'invention concerne un objet portable comprenant un boîtier formant une enceinte dans laquelle un appareil nécessitant de l'air pour son fonctionnement est agencé, caractérisé en ce que ledit objet portable comprend en outre un dispositif de fermeture comprenant au moins élément perméable, ledit dispositif de fermeture étant agencé pour permettre une imperméabilité aux liquides tout en permettant à l'atmosphère à l'intérieur de l'enceinte de communiquer avec l'atmosphère à l'extérieur.

Dans un premier mode de réalisation avantageux, ledit appareil nécessitant de l'air pour son fonctionnement est une pile zinc-air.

Dans un second mode de réalisation avantageux, ledit appareil nécessitant de l'air pour son fonctionnement est un altimètre.

Dans un troisième mode de réalisation avantageux, ledit boitier est composé d'une première partie et d'une seconde partie se fixant l'une à l'autre, le dispositif de fermeture comprenant un joint réalisé dans un matériau semi-perméable.

Dans un quatrième mode de réalisation avantageux, ledit joint est réalisé en silicone.

Dans un cinquième mode de réalisation avantageux, ledit boitier présente une ouverture traversante, le dispositif de fermeture comprenant une membrane semi-perméable située en regard de ladite ouverture.

Dans un autre mode de réalisation avantageux, ladite membrane semi-perméable comporte un support poreux sur lequel un film perméable aux gaz et imperméable aux liquides est fixé, l'épaisseur dudit film permettant de modifier la constante de temps pour l'équilibre des gaz entre l'intérieur et l'extérieur de l'objet portable.

Dans un autre mode de réalisation avantageux, le film est un polymère.

Dans un autre mode de réalisation avantageux, ledit boitier comporte, sur sa paroi intérieure, un logement dans lequel le dispositif de fermeture est placé, ledit logement présentant une paroi latérale comprenant une gorge s'étendant le long de ladite paroi latérale et utilisée pour le maintien de ladite membrane, ladite membrane étant en outre maintenu plaquée sur la paroi intérieur par des moyens de maintien composés d'un couvercle et en ce que ledit dispositif de fermeture comprend en outre un joint intercalé entre ledit couvercle et la membrane.

Dans un autre mode de réalisation avantageux, ledit boitier comprend un logement dans lequel une ouverture traversante est réalisée, ledit logement étant fermé par ledit dispositif de fermeture et en ce que ledit dispositif de fermeture comprend un module perméable monté mobile de sorte que, dans un environnement gazeux, le module perméable se trouve dans une position de repos permettant aux gaz de s'infiltrer dans l'ouverture dudit boitier via ledit module perméable et que, dans un environnement liquide, le module perméable se trouve dans une position de fonctionnement dans laquelle les gaz et liquides sont bloqués.

Dans un autre mode de réalisation avantageux, ledit module perméable comporte un support tubulaire à l'extrémité duquel une membrane est fixée, le support étant monté suspendu par l'intermédiaire d'un joint souple.

Dans un autre mode de réalisation avantageux, la membrane est choisie perméable.

### BREVE DESCRIPTION DES FIGURES

Les buts, avantages et caractéristiques du dispositif selon la présente invention apparaîtront plus clairement dans la description détaillée suivante d'au moins une forme de réalisation de l'invention donnée uniquement à titre d'exemple non limitatif et illustrée par les dessins annexés sur lesquels :
- La figure 1 représente schématiquement un premier mode d'exécution d'un premier mode de réalisation de l'objet portable selon l'invention;
- La figure 2 représente schématiquement un second mode d'exécution d'un premier mode de réalisation de l'objet portable selon l'invention;
- La figure 3 représente schématiquement un troisième mode d'exécution d'un premier mode de réalisation de l'objet portable selon l'invention;
- La figure 4 représente schématiquement un premier mode d'exécution d'un second mode de réalisation de l'objet portable selon l'invention;
- La figure 5 représente schématiquement un second mode d'exécution d'un second mode de réalisation de l'objet portable selon l'invention;

### DESCRIPTION DETAILLEE

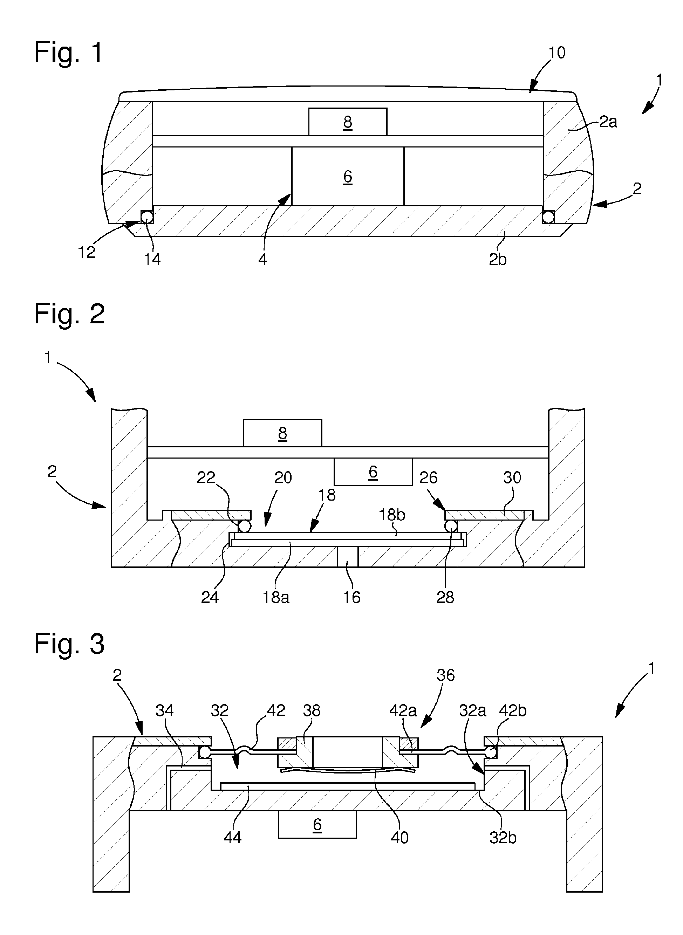

Un objet portable 1 selon la présente invention est représenté aux figures 1 à 5. Cet objet portable 1 peut se présenter sous la forme d'une pièce d'horlogerie ou d'un téléphone portable ou d'un smartphone ou d'une tablette tactile.

Cet objet portable 1 comporte un boitier 2 formant une enceinte dans lequel un appareil 4 nécessitant de l'air pour son fonctionnement est agencé.

Dans un premier mode de réalisation visible aux figures 1 à 3, l'appareil 4 nécessitant de l'air pour son fonctionnement est une pile électrique 6. Cette pile est par exemple du type zinc-air c'est-à-dire qu'elle utilise l'oxygène de l'air pour oxyder le métal la composant et fournir de l'électricité. Une telle pile zinc air doit être alimentée en air sous peine de sécher et de perdre en performances.

Cette pile électrique est utilisée pour faire fonctionner un système électronique 8 associé à des moyens d'affichage 10. Le système électronique 8 peut en outre comprendre des moyens de commande et/ou des moyens de communication.

Avantageusement selon l'invention, l'objet portable est en outre muni d'un dispositif de fermeture 12 permettant à la pile d'être alimentée en air tout en assurant à l'objet portable une étanchéité aux liquides.

Dans un premier mode d'exécution visible à la figure 1, le boitier 2 de l'objet portable comporte au moins une première partie 2a et une second partie 2b telles qu'une carrure 2a fermée par un fond 2b. Les moyens d'affichages 10 comme un écran numérique ou un ensemble cadran-glace peuvent former une troisième partie. Le dispositif de fermeture 12 comporte alors un joint 14 situé entre la première 2a et la seconde partie 2b.

Ce joint 14 est choisi pour être réalisé dans un matériau semi-perméable c'est-à-dire un matériau permettant aux gaz de traverser mais bloquant les liquides. Un tel matériau peut être un polymère. En effet, les gaz traversent les films polymères denses par un processus de "dissolution-diffusion". L'application d'un gradient de pression gazeuse (force motrice) entre les faces amont (en surpression) et aval (en dépression) de la membrane provoque les trois phénomènes successifs suivants :
- Absorption du gaz à la surface amont,
- Dissolution et diffusion moléculaire du gaz dans le matériau
- Désorption du gaz de la surface aval.

Un matériau utilisé pour ce type d'application est le silicone. Les silicones présentent, en moyenne, une perméabilité aux gaz à température ambiante 10 fois supérieure à celle du caoutchouc naturel, mais s'en rapprochent vers 100 à 150 °C.

Cette configuration associe donc le faible interstice entre la première pièce 2a et la seconde pièce 2b, et le joint 14 en matériau semi-perméable pour permettre à une faible quantité d'air de passer de l'extérieur de l'objet portable jusqu'à l'intérieur. Dans ce cas, la constante de temps nécessaire pour équilibrer les gaz entre l'intérieur et l'extérieur de l'objet portable est de l'ordre de quelques jours. On comprend alors que ce mode d'exécution est utilisable pour le fonctionnement d'un objet portable 1 consommant peu d'électricité et donc nécessitant peu d'air comme par exemple une montre à trois aiguilles affichant juste l'heure, cette dernière consommant quelques microampères.

Dans un second mode d'exécution visible à la figure 2, le boitier 2 de l'objet portable est agencé pour comprendre une ouverture 16 laissant passer un volume d'air conséquent ayant, par exemple, un diamètre de 5mm et étant située dans le fond du boitier. Dans ce cas, le dispositif de fermeture 12 comporte une membrane 18 dite haute densité installée à l'intérieur du boitier. Pour cela, la paroi intérieure du boitier comprend, au niveau de l'ouverture, un logement 20 pour la membrane à haute densité 18. Ce logement présente une paroi latérale 22. Cette paroi latérale présente une gorge 24 s'étendant le long de la paroi latérale. Cette gorge est utilisée pour le maintien de ladite membrane haute densité. Cette membrane haute densité est maintenue par des moyens de maintien 26 composés d'un joint 28 et d'un couvercle 30. Le couvercle 30 est fixé à la paroi intérieure du boitier afin que le joint 28 soit intercalé entre ledit couvercle 30 et la membrane haute densité 18.

La membrane haute-densité 18 aussi « membrane supportée » ou « membrane composite » est composée d'un film 18a réalisé dans un matériau polymère qui retient à 100% l'eau mais qui est perméable aux gaz, comme tous les plastiques.

Ainsi, pour pouvoir utiliser ce film 18a, il est alors obligatoire de les déposer sur un support 18b qui est également une membrane beaucoup plus épaisse. Cette membrane support 18b est poreuse pour que l'air puisse passer, le seul rôle de la membrane support 18b étant mécanique puisque son seul but est de supporter le film 18a en polymère. Par exemple, une membrane support en gore-tex ® peut être utilisée.

Afin de régler le débit d'air traversant la membrane haute densité 18, l'épaisseur du film 18a est le paramètre sur lequel il faut agir. Plus le film 18a sera fin et plus le débit sera important mais le film 18a sera plus fragile et inversement.

Typiquement, pour avoir une constante de temps pour l'équilibre des gaz entre l'intérieur et l'extérieur de l'objet portable de l'ordre d'une minute, l'épaisseur du film 18a doit être de l'ordre de 10 micromètres.

Cette caractéristique permet à cette membrane haute densité 18 d'être utilisée dans un objet portable dont le système électronique est relativement gourmand en énergie électrique, environ quelques 50 milliampères, cette consommation pouvant être due à l'utilisation de capteurs ou d'écran numériques ou de moyens de communication de type bluetooth ®.

Dans un troisième mode d'exécution visible à la figure 3, le boitier 2 de l'objet portable comporte, sur sa paroi extérieure, un logement 32 dans lequel le dispositif de fermeture 12 est agencé. Dans ce logement 32, une ouverture 34 est agencée. Le dispositif de fermeture 12 se présente sous la forme d'un module perméable 36 monté mobile.

En effet, le dispositif de fermeture 12 c'est-à-dire le module perméable 36 comprend un support 38 se présentant sous la forme une pièce tubulaire ouverte à l'extrémité de laquelle une membrane 40 est fixée. Ce support 38 est monté suspendu par l'intermédiaire d'un joint souple 42. Dans le cas d'un support 38 tubulaire circulaire, le joint souple 42 est également circulaire. Le bord intérieur 42a du joint souple 42 est fixé à la pièce tubulaire 38 alors que le bord extérieur 42b est fixé à la paroi latérale 32a du logement 32.

La membrane 40 fermant l'une des extrémités du support 38 tubulaire est située à l'extrémité du support tubulaire en regard du logement et est réalisée dans un matériau perméable. Un matériau utilisé est le goretex qui présente la caractéristique de laisser passer les gaz et de retenir les liquides jusqu'à une pression d'un bar.

Le dispositif de fermeture 12 fonctionne comme suit. Lorsque l'objet portable se trouve à l'air libre, l'air passe à travers la membrane 40 perméable et s'infiltre dans l'ouverture 34 du boitier 2 de sorte que la pile 6 puisse fournir de l'énergie électrique. Le module perméable 36 se trouve alors dans une première position ou position de repos dans laquelle aucune contrainte extérieure n'est exercée sur le joint souple 42.

Lorsque l'objet portable 1 est immergé, l'eau vient alors exercer une pression et donc un appui mécanique sur la membrane 40 du support tubulaire 38. Cet appui mécanique sur la membrane 40 provoque une déformation du joint souple 42. Cette déformation du joint souple 42 permet un déplacement du module perméable 36 et donc du support tubulaire 38 de sorte qu'il se déplace pour entrer en contact avec le fond du logement c'est-à-dire dans une seconde position ou position de fonctionnement. Dans ce cas, la membrane 40 entre en contact avec le fond 32b. Ce contact entre la membrane perméable 40 et le fond 32b du logement 32 c'est-à-dire le boitier, entraine une fermeture du conduit, même sous une forte pression de 10 bars.

L'avantage d'un tel dispositif de fermeture est qu'il permet d'avoir une constante de temps pour l'équilibre des gaz entre l'intérieur et l'extérieur de l'objet portable de l'ordre d'une seconde c'est-à-dire que le débit d'air est important tout en garantissant l'étanchéité de l'objet portable.

Dans une première variante de ce troisième mode d'exécution, le fond 32b du logement est muni d'un second joint 44 appelé joint plat. Ce joint plat 44 est utilisé pour améliorer le blocage de la progression de l'eau. En effet, ce joint plat 44 est réalisé dans un matériau de type plastique comme un polymère ou caoutchouc. Le rôle de ce joint plat 44 est de parfaitement obstruer les pores de la membrane.

Dans une seconde variante de ce troisième mode d'exécution, un absorbeur comme par exemple du silicagel est utilisé en plus de la membrane. Cet absorbeur est utilisé afin de réduire l'importance des variations d'humidité relative dans une montre. La quantité d'absorbeur peut être déterminée en fonction du volume de la montre afin que la perméabilité à l'humidité de celle-ci soit équivalente à celle obtenue avec des joints traditionnels.

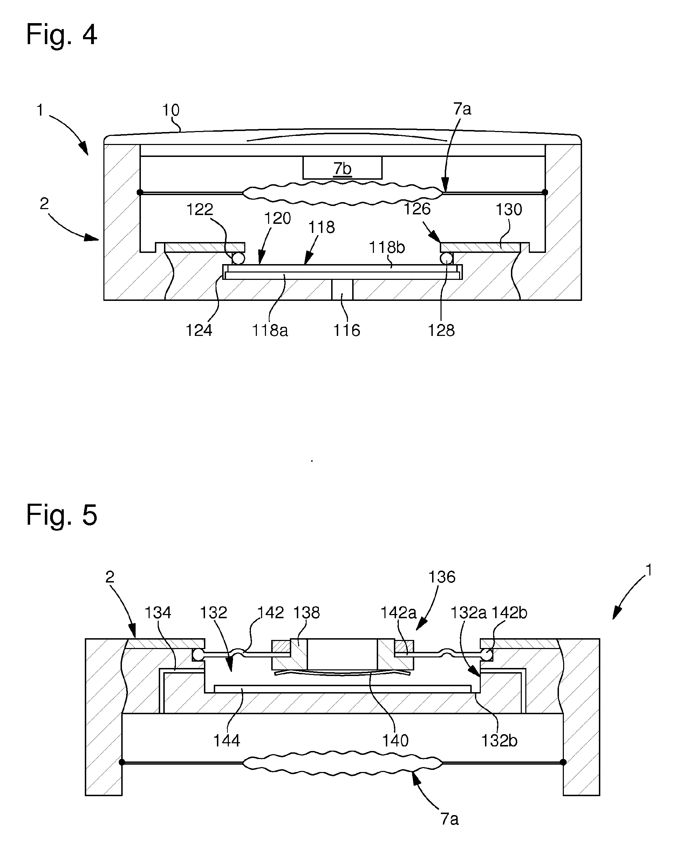

Dans un second mode de réalisation visible aux figures 4 et 5, l'appareil nécessitant de l'air pour son fonctionnement 4 est un altimètre 7. Un tel altimètre 7 peut être mécanique ou électronique et comprend une membrane déformable 7a.

Dans le cas d'un altimètre mécanique, celui-ci comprend un mécanisme de transmission 7b. La membrane 7a est capable de se déformer mécaniquement sous l'effet de la pression extérieure agissant alors sur le dispositif de transmission 7b. Le mécanisme de transmission 7b transfère ainsi ledit mouvement de déformation de la membrane 7a, représentatif de la pression, vers des moyens d'affichage 10 affichant la valeur de l'altitude.

Dans le cas d'un altimètre électronique (non représenté), celui-ci comprend un circuit de transmission 7c. La membrane 7a est capable de se déformer mécaniquement sous l'effet de la pression extérieure agissant alors sur le circuit de transmission 7c. Le circuit de transmission 7c est une interface permettant de convertir la déformation de la membrane en un signal électrique. Ce signal électrique est traité afin que des moyens d'affichage 10 puissent utiliser ce signal pour afficher l'information d'altitude.

Avantageusement selon l'invention, l'objet portable 1 est en outre muni d'un dispositif de fermeture 12 permettant à l'air de s'infiltrer dans l'enceinte de l'objet portable de sorte à interagir avec la membrane 7a de l'altimètre sans que l'eau ne s'infiltre.

Dans un premier mode d'exécution visible à la figure 4, le boitier 2 de l'objet portable est agencé pour comprendre une ouverture 116 laissant passer un volume d'air conséquent ayant par exemple un diamètre de 5mm et située dans le fond du boitier. Dans ce cas, le dispositif de fermeture 12 comporte une membrane dite haute densité 118 installée à l'intérieur du boitier 2. Pour cela, la paroi intérieure du boitier comprend, au niveau de l'ouverture, un logement 120 pour la membrane à haute densité 118. Ce logement 120 présente une paroi latérale 122. Cette paroi latérale 122 présente une gorge 124 s'étendant le long de la paroi latérale 122. Cette gorge 124 est utilisée pour le maintien de ladite membrane haute densité 118. Cette membrane haute densité 118 est maintenue par des moyens de maintien 126 composés d'un joint 128 et d'un couvercle 130. Le couvercle 130 est fixé à la paroi intérieure du boitier afin que le joint 128 soit intercalé entre ledit couvercle 130 et la membrane haute densité 118.

La membrane haute-densité 118 aussi « membrane supportée » ou «membrane composite » est composée d'un film 118a réalisé dans un matériau polymère qui retient à 100% l'eau mais qui est perméable aux gaz, comme tous les plastiques.

Ainsi, pour pouvoir utiliser ce film 118a, il est alors obligatoire de les déposer sur un support 118b qui est également une membrane beaucoup plus épaisse. Cette membrane support 118b est poreuse pour que l'air puisse passer, le seul rôle de la membrane support 118b étant mécanique puisque son seul but est de supporter le film 118a en polymère. Par exemple, une membrane support 118b en goretex ® peut être utilisée.

Afin de régler le débit d'air traversant la membrane haute densité 118, l'épaisseur du film 118a est le paramètre sur lequel il faut agir. Plus le film 118a sera fin et plus le débit sera important mais le film 118a sera plus fragile et inversement.

Typiquement, pour avoir une constante de temps pour l'équilibre des gaz entre l'intérieur et l'extérieur de l'objet portable de l'ordre d'une minute, l'épaisseur du film 118a doit être de l'ordre de 10 micromètres.

Cette caractéristique permet l'utilisation de cette membrane haute densité 118 pour un altimètre car le temps d'équilibrage est relativement faible. Un temps d'équilibrage faible permet à l'utilisateur d'avoir rapidement la valeur d'altitude demandée.

Dans un second mode d'exécution visible à la figure 5, le boitier 2 de l'objet portable comporte, sur sa paroi extérieure, un logement 132 dans lequel le dispositif de fermeture 12 est agencé ainsi qu'une ouverture agencée au niveau du logement.

En effet, le dispositif de fermeture 12 c'est-à-dire le module perméable 136 comprend un support 138 se présentant sous la forme une pièce tubulaire ouverte à l'extrémité de laquelle une membrane 140 est fixée. Ce support 138 est monté suspendu par l'intermédiaire d'un joint souple 142. Dans le cas d'un support 138 tubulaire circulaire, le joint souple 142 est également circulaire. Le bord intérieur 142a du joint souple 142 est fixé à la pièce tubulaire 138 alors que le bord extérieur 142b est fixé à la paroi latérale 132a du logement 132.

La membrane 40 fermant l'une des extrémités du support 38 tubulaire est située à l'extrémité du support tubulaire en regard du logement et est réalisée dans un matériau perméable. Un matériau utilisé est le goretex qui présente la caractéristique de laisser passer les gaz et de retenir les liquides jusqu'à une pression d'un bar.

Le dispositif de fermeture 12 fonctionne comme suit. Lorsque l'objet portable se trouve à l'air libre, l'air passe à travers la membrane 140 perméable et s'infiltre dans l'ouverture 134 du boitier 2 de sorte que la mesure d'altitude par la membrane 7a puisse se faire. Le module perméable 136 se trouve alors dans une première position ou position de repos dans laquelle aucune contrainte extérieure n'est exercée sur le joint souple 142.

Lorsque l'objet portable 1 est immergé, l'eau vient alors exercer une pression et donc un appui mécanique sur la membrane 140 du support tubulaire 138. Cet appui mécanique sur la membrane 140 provoque une déformation du joint souple 142. Cette déformation du joint souple 142 permet un déplacement du module perméable 136 et donc du support tubulaire 38 de sorte que ce dernier se déplace pour entrer en contact avec le fond du logement c'est-à-dire dans une seconde position ou position de fonctionnement. Dans ce cas, la membrane 140 entre en contact avec le fond 132b. Ce contact entre la membrane perméable 140 et le fond 132b du logement 132 c'est-à-dire le boitier, entraine une fermeture du conduit, même sous une forte pression de 10bar.

L'avantage d'un tel dispositif de fermeture est qu'il permet d'avoir une constante de temps pour l'équilibre des gaz entre l'intérieur et l'extérieur de l'objet portable de l'ordre d'une seconde c'est-à-dire que le débit d'air est important tout en garantissant l'étanchéité de l'objet portable. Par conséquent, la mesure de l'altitude est rapide permettant à l'utilisateur de ne pas attendre trop longtemps pour avoir l'altitude exacte mesurée.

Dans une première variante de ce second mode d'exécution, le fond 132a du logement 132 est muni d'un second joint 144 appelé joint plat. Ce joint plat 144 est utilisé pour améliorer le blocage de la progression de l'eau. En effet, ce joint plat 144 est réalisé dans un matériau de type plastique comme un polymère ou caoutchouc. Le rôle de ce joint plat 144 est de parfaitement obstruer les pores de la membrane.

Dans une seconde variante de ce second mode d'exécution, un absorbeur comme par exemple du silicagel est utilisé en plus de la membrane. Cet absorbeur est utilisé afin de réduire l'importance des variations d'humidité relative dans une montre. La quantité d'absorbeur peut être déterminée en fonction du volume de la montre afin que la perméabilité à l'humidité de celle-ci soit équivalente à celle obtenue avec des joints traditionnels.

On comprendra que diverses modifications et / ou améliorations évidentes pour l'homme du métier peuvent être apportées aux différents modes de réalisation de l'invention décrits dans la présente description sans sortir du cadre de l'invention.

## Revendications

1. Objet portable (1) comprenant un boîtier (2) formant une enceinte dans laquelle un appareil (6) nécessitant de l'air pour son fonctionnement est agencé, **caractérisé en ce que** ledit objet portable comprend en outre un dispositif de fermeture (12) comprenant au moins un élément perméable, ledit dispositif de fermeture étant agencé pour permettre une imperméabilité aux liquides tout en permettant à l'atmosphère à l'intérieur de l'enceinte de communiquer avec l'atmosphère à l'extérieur.

2. Objet portable selon la revendication 1, **caractérisé en ce que** ledit appareil nécessitant de l'air pour son fonctionnement est une pile zinc-air.

3. Objet portable selon les revendications 1 ou 2, **caractérisé en ce que** ledit appareil nécessitant de l'air pour son fonctionnement est un altimètre.

4. Objet portable selon l'une des revendications 1 à 2 , **caractérisé en ce que** ledit boitier (2) est composé d'une première partie (2a) et d'une seconde partie (2b) se fixant l'une à l'autre, le dispositif de fermeture comprenant un joint (14) réalisé dans un matériau semi-perméable.

5. Objet portable selon la revendication 4, **caractérisé en ce que** ledit joint (14) est réalisé en silicone.

6. Objet portable selon l'une des revendications 1 à 3, **caractérisé en ce que** ledit boitier (2) présente une ouverture (16, 116) traversante, le dispositif de fermeture comprenant une membrane semi-perméable (18, 118) située en regard de ladite ouverture.

7. Objet portable selon la revendication 6, **caractérisé en ce que** ladite membrane semi-perméable (18, 118) comporte un support poreux (18b, 118b) sur lequel un film (18a, 118a) perméable aux gaz et imperméable aux liquides est fixé, l'épaisseur dudit film permettant de modifier la constante de temps pour l'équilibre des gaz entre l'intérieur et l'extérieur de l'objet portable.

8. Objet portable selon la revendication 7, **caractérisé en ce que** le film (18a, 118a) est un polymère.

9. Objet portable selon les revendications 7 ou 8, **caractérisé en ce que** ledit boitier (2) comporte, sur sa paroi intérieure, un logement (20, 120) dans lequel le dispositif de fermeture (12) est placé, ledit logement présentant une paroi latérale (22, 122) comprenant une gorge (24, 124) s'étendant le long de ladite paroi latérale et utilisée pour le maintien de ladite membrane (18, 118), ladite membrane étant en outre maintenu plaquée sur la paroi intérieur par des moyens de maintien (26, 126) composés d'un couvercle (30, 130) et **en ce que** ledit dispositif de fermeture comprend en outre un joint (28, 128) intercalé entre ledit couvercle et la membrane.

10. Objet portable selon l'une des revendications 1 à 3, **caractérisé en ce que** ledit boitier (2) comprend un logement (32, 132) dans lequel une ouverture (34, 1334) traversante est réalisée, ledit logement étant fermé par ledit dispositif de fermeture et **en ce que** ledit dispositif de fermeture comprend un module perméable (36, 136) monté mobile de sorte que, dans un environnement gazeux, le module perméable se trouve dans une position de repos permettant aux gaz de s'infiltrer dans l'ouverture dudit boitier via ledit module perméable et que, dans un environnement liquide, le module perméable se trouve dans une position de fonctionnement dans laquelle les gaz et liquides sont bloqués.

11. Objet portable selon la revendication 10, **caractérisé en ce que** ledit module perméable (36, 136) comporte un support tubulaire (38, 138) à l'extrémité de duquel une membrane (40, 140) est fixée, le support étant monté suspendu par l'intermédiaire d'un joint souple (42, 142).

12. Objet portable selon la revendication 11, **caractérisé en ce que** ladite membrane est choisie perméable.
